# EUROPÄISCHE PATENTSCHRIFT

(11) **EP 2 704 932 B1**
(45) Veröffentlichungstag und Bekanntmachung des Hinweises auf die Patenterteilung: **10.04.2019**
(21) Anmeldenummer: 12708495.2
(22) Anmeldetag: 28.02.2012
(51) Int. Cl.: B60T 8/1761

(54) **ANTIBLOCKIERSYSTEM FÜR EIN FAHRZEUG MIT ELEKTROMOTORISCHEM FAHRZEUGANTRIEB**
ANTI-BLOCKING SYSTEM FOR A VEHICLE HAVING AN ELECTROMOTIVE VEHICLE DRIVE UNIT
SYSTÈME ANTIBLOCAGE POUR UN VÉHICULE À ENTRAÎNEMENT ÉLECTROMOTEUR

(30) Priorität: 06.05.2011 DE 102011100811
(43) Veröffentlichungstag der Anmeldung: 12.03.2014
(73) Patentinhaber: Audi AG, 85045 Ingolstadt (DE)
(72) Erfinder: LOOS, Sebastian, 85049 Ingolstadt (DE); HIRSCHMANN, Dirk, 85221 Dachau (DE); KLEICKMANN, Bodo, 85049 Ingolstadt (DE)
(74) Vertreter: Wohnert, Dietmar
(86) Internationale Anmeldenummer: PCT/EP2012/000853
(87) Internationale Veröffentlichungsnummer: WO 2012/152348

(56) Entgegenhaltungen:
- DE-A1-102007 017 821
- DE-A1-102009 030 816
- US-A- 5 472 265
- US-A- 5 511 859
- US-A1- 2006 220 453

## Beschreibung

Die Erfindung betrifft ein Antiblockiersystem für ein Fahrzeug mit elektromotorischem Fahrzeugantrieb nach dem Oberbegriff des Patentanspruchs 1.

Elektromotorische Fahrzeugantriebe, die als Antriebsmotoren elektrische Maschinen verwenden, die sowohl im Motorbetrieb als auch im Generatorbetrieb betrieben werden können, haben ein durch die Lorentzkraft erzeugtes Drehmoment, welches zum Beschleunigen einen positiven Wert und zum Bremsen einen negativen Wert einnimmt. Die Lorentzkraft ist proportional zum Kreuzprodukt aus dem Strom im Stator und dem magnetischen Fluss, der sowohl Stator als auch Rotor durchsetzt. Daraus ergibt sich, dass das Drehmoment in einer elektrischen Maschine nicht nur durch die Veränderung des Stroms und des magnetischen Flusses veränderbar ist, sondern auch durch den Winkel, den die beiden vektoriellen Größen zueinander haben. Bei der Regelung elektrischer Maschinen wird daher die Spannung an den Klemmen der Maschine so verändert, dass das aus dem Kreuzprodukt resultierende Drehmoment den geforderten Wert annimmt. In welcher Weise die drei Größen angepasst werden bzw. angepasst werden können, hängt stark vom jeweiligen Maschinentyp ab. Bei Drehfeldmaschinen läuft zur Erzeugung eines Drehmoments der Stromvektor mit der gleichen Geschwindigkeit, wie das magnetische Feld (Drehfeld) im Stator um. Bei Synchronmaschinen ist die Richtung des Rotorfelds durch dessen Aufbau fest vorgegeben. Um eine konstante Kraft zu erzeugen, muss sich der Rotor daher mit der gleichen Geschwindigkeit drehen, wie der Strom im Stator umläuft. Falls der Strom dem Feld vorauseilt, ergibt sich ein positives Drehmoment (Beschleunigung), und falls er dem Feld nacheilt, ergibt sich ein negatives Drehmoment (Bremsen).

Für Fahrzeuge sind seit vielen Jahren Antiblockiersysteme bekannt, abgekürzt ABS genannt, die im Falle einer gewünschten maximalen Bremsverzögerung verhindern, dass die abgebremsten Fahrzeugräder blockieren. Dadurch wird für das Fahrzeug eine hohe Bremswirkung und eine vom Fahrer beherrschbare Fahrstabilität erreicht. Insbesondere bleibt das Fahrzeug auch bei maximaler Bremsleistung durch das Antiblockiersystem noch lenkbar.

In Fahrzeugen mit elektromotorischem Fahrzeugantrieb, wie er auch in Hybridfahrzeugen vorgesehen ist, werden die elektrischen Antriebsmotoren beim Bremsvorgang als Generatoren betrieben, wobei ein rekuperatives Bremsmoment von den Antriebsmotoren auf die Antriebsräder einwirkt. Aus der DE 10 2008 017 480 A1 ist eine derartige rekuperative Bremsanlage bekannt, bei der ein Elektromotor als Generator während des Bremsvorganges betrieben wird. Zur Vermeidung eines Überbremsens an der Hinterachse wird dort vorgeschlagen, dass das Rekuperationsmoment derart begrenzt wird, dass an mindestens einem Fahrzeugrad der Schlupf eine vorgegebene Schlupfschwelle nicht oder nur unwesentlich überschreitet.

Ein Fahrzeug mit elektromotorischem Fahrzeugantrieb und einem ABS-Steuergerät gemäß dem Oberbegriff des unabhängigen Anspruchs 1 ist aus der DE 10 2009 030 816 A1 bekannt.

Der Erfindung liegt die Aufgabe zugrunde, ein Antiblockiersystem für ein Fahrzeug mit elektromotorischem Fahrzeugantrieb anzugeben, mit dem eine optimale Bremsverzögerung bei gleichzeitig möglichst großer Fahrstabilität erreicht wird.

Die Lösung dieser Aufgabe wird durch die im Patentanspruch 1 angegebenen Merkmale erhalten. Bevorzugte Weiterbildungen der Erfindung sind in den Unteransprüchen offenbart.

Jeder elektrische Antriebsmotor wird erfindungsgemäß von einem ihm zugeordneten steuerbaren Umrichter gespeist, der seinerseits von einem Antiblockiersystem-Steuergerät, kurz ABS-Steuergerät, ständig eine nicht zu unterschreitende Mindest-Bremsdrehzahl für den zugeordneten Antriebsmotor mitgeteilt bekommt, wobei diese Mindest-Bremsdrehzahl so bemessen ist, dass ein vorgegebener maximaler Bremsschlupf nicht überschritten wird. Für den Umrichter sind also während eines Bremsvorganges alle oberhalb der Mindest-Bremsdrehzahl liegenden Bremsdrehzahlen zulässig, da damit sichergestellt ist, dass der Bremsschlupf an den Rädern nicht unzulässig groß ist. Wird eine maximale Bremsleistung über das Bremspedal vom Fahrer angefordert, steuert der Umrichter den ihm zugeordneten Antriebsmotor so an, dass dieser eine optimale Mindest-Bremsdrehzahl erreicht. Da jedem Antriebsmotor ein Umrichter zugeordnet ist, kann eine optimale Bremsleistung für jedes der Antriebsräder festgelegt werden. Dabei wird gleichzeitig sichergestellt, dass keines der Antriebsräder bei einem maximalen Bremsvorgang eine vorgegebene Bremsschlupfgrenze unterschreitet, wodurch auch in einer extremen Bremssituation eine hohe Fahrstabilität und Lenkfähigkeit sichergestellt wird.

Erfindungsgemäß wird für jedes Antriebsrad in Abhängigkeit von der aktuellen Fahrgeschwindigkeit und möglicherweise weiterer Fahrbedingungen eine individuelle Mindest-Bremsdrehzahl vorgegeben. In die Berechnung der Mindest-Bremsdrehzahl für jedes Antriebsrad bzw. jeden Antriebsmotor wird nicht nur die Fahrgeschwindigkeit, sondern auch weitere Parameter wie beispielsweise das aktuelle Fahrzeuggewicht, die Umgebungstemperatur, der Ladezustand des Fahrzeugs und möglicherweise auch der jeweils gewählte Betriebsmodus des Fahrzeugs eingehen. Dabei wird die Mindest-Bremsdrehzahl ständig, also auch während des normalen Fahrbetriebs, an die Umrichter übermittelt, so dass diese in der Bremssituation durch eine Drehzahl-Grenzwertüberwachung eine entsprechende Einhaltung der Mindest-Bremsdrehzahl vornehmen können.

In einem als Asynchronmotor ausgebildeten Antriebsmotor sorgt der Umrichter dafür, dass das in dem ihm zugeordneten Antriebsmotor erzeugte Drehfeld so geregelt wird, dass die vorgegebene Mindest-Bremsdrehzahl auch bei einer vorgegebenen maximalen Bremswirkung nicht unterschritten wird. Ist der Antriebsmotor als Synchronmaschine aufgebaut, wird die Drehzahl des vom Umrichter erzeugten Drehfelds bei maximal vorgegebener Bremswirkung auf die Mindest-Bremsdrehzahl geregelt. In beiden Fällen steuert das ABS-Steuergerät den Schlupf der Antriebsräder aktiv, das heißt das ABS-Steuergerät gibt dem Umrichter die zu einem optimalen Bremsschlupf gehörende Mindest-Bremsdrehzahl an. Die Schlupfregelung ist auf diese Weise individuell für jedes Antriebsrad auf einfache Weise realisierbar.

Um hohe Verzögerungswerte zu erreichen und die Fahrstabilität des Fahrzeugs auch bei starkem Abbremsen noch ausreichend gewährleisten zu können, ist ein Bremsschlupf für jedes Antriebsrad im Bereich zwischen 10 % bis 20 % der jeweils aktuellen Fahrgeschwindigkeit des Fahrzeugs begrenzt. Welcher Wert dabei exakt zweckmäßig ist, kann in einem Wertespeicher eines Steuergeräts für das jeweilige Fahrzeug und für unterschiedliche Fahrbetriebszustände abgelegt sein. Der jeweils aktuell gültige Wert für den maximalen Bremsschlupf kann aber auch anhand von aktuellen Fahrzeugparametern, wie Fahrzeuggewicht, Fahrgeschwindigkeit, Umgebungstemperatur, berechnet werden. Dabei kann auch eine Unterstützung des rekuperativen Bremsmoments durch die hydraulischen Reibungsbremsen des Fahrzeugs erfolgen. Beispielsweise kann eine Grundbremsleistung durch die Reibungsbremsen bereitgestellt werden, während das darüber hinaus erforderliche Bremsmoment durch eine entsprechende Drehzahlregelung an den Umrichtern der Antriebsmotoren bereitgestellt wird.

Eine Aufteilung der von den Reibungsbremsen ausgehenden Bremswirkung und der rekuperativen Bremswirkung der Antriebsmotoren kann im Fahrdynamikregler oder einem anderen Steuergerät des Fahrzeugs erfolgen.

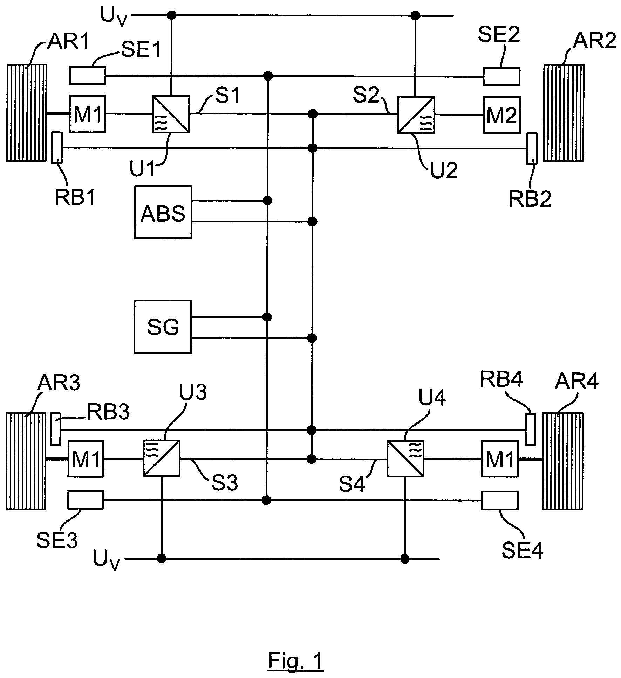

Die Erfindung wird nachfolgend anhand eines in der Zeichnung gemäß Figur 1 dargestellten Blockschaltbildes näher erläutert.

Das in Fig. 1 dargestellte Ausführungsbeispiel zeigt das Antriebs- und Bremssystem eines Fahrzeugs mit elektromotorischem Fahrzeugantrieb, wobei jedes der vier Antriebsräder AR1 bis AR4 von jeweils einem zugeordneten elektrischen Antriebsmotor M1 bis M4 angetrieben wird. Die Antriebsmotoren M1 bis M4 werden während eines Bremsvorganges als Generatoren betrieben und erzeugen dadurch ein rekuperatives Bremsmoment an den Antriebsrädern AR1 bis AR4.

Die Antriebsmotoren M1 bis M4 werden von jeweils zugeordneten Umrichtern U1 bis U4 mit einem Drei-Phasen-Drehstrom gespeist. Eingangsseitig sind die Umrichter U1 bis U4 an die Versorgungsspannung U_{V} angeschlossen. An Steuereingängen S1 bis S4 sind die Umrichter U1 bis U4 mit einem ABS-Steuergerät ABS und einem weiteren Steuergerät SG verbunden, welches hier das Motorsteuergerät mit integriertem Fahrdynamikregler ist. Das ABS-Steuergerät ABS und das Steuergerät SG sind über Steuerleitungen außerdem mit Sensoreinheiten SE1 bis SE4 verbunden, die antriebsspezifische Informationen an die Steuergeräte ABS und SG übertragen. Insbesondere werden von den Sensoreinheiten SE1 bis SE4 die Raddrehzahlen der Antriebsräder AR1 bis AR4 erfasst, mit denen im Steuergerät ABS und/oder SG die Umfangsgeschwindigkeiten der Antriebsräder AR1 bis AR4 individuell errechnet werden können. Durch einen Vergleich mit der jeweils aktuellen Fahrgeschwindigkeit des Fahrzeugs kann aus den Umfangsgeschwindigkeiten der Antriebsräder AR1 bis AR4 auf den jeweiligen Schlupf für jedes der Antriebsräder AR1 bis AR4 geschlossen werden. Für das Antiblockiersystem wird insbesondere während eines Bremsvorganges der Bremsschlupf für die jeweiligen Antriebsräder AR1 bis AR4 ermittelt.

Zur Unterstützung der rekuperativen Bremswirkung ist jedes Antriebsrad AR1 bis AR4 mit einer Reibungsbremse RB1 bis RB4 ausgerüstet, die vom ABS-Steuergerät ABS betätigt werden. Das ABS-Steuergerät ABS kann bei einem Bremsvorgang die Reibungsbremsen RB1 bis RB4 so betätigen, dass von ihnen ein Grundbremsmoment auf die Antriebsräder AR1 bis AR4 übertragen wird. Diesem Grundbremsmoment kann nun eine rekuperative Bremswirkung überlagert werden, die von den Antriebsmotoren M1 bis M4 ausgeht. Zu diesem Zweck werden die Antriebsmotoren M1 bis M4 als Generatoren betrieben und dabei daraufhin überwacht, dass eine vorgegebene Mindest-Bremsdrehzahl nicht unterschritten wird. Diese Mindest-Bremsdrehzahl, die für jedes Antriebsrad AR1 bis AR4 individuell vorgegeben sein kann, entspricht einem vorgegebenen Bremsschlupf, der als Grenzwert nicht überschritten werden sollte. Die Mindest-Bremsdrehzahl begrenzt damit den Bremsschlupf an den Antriebsrädern AR1 bis AR4.

Wird beispielsweise vom ABS-Steuergerät ABS für die aktuelle Bremssituation ein optimaler und damit auch maximaler Bremsschlupf von 15 % vorgegeben, so kann daraus die Mindest-Bremsdrehzahl nₘᵢₙ für das jeweilige Antriebsrad wie folgt ermittelt werden:
nₘᵢₙ = vₘᵢₙ/2πr wobei vₘᵢₙ die um den vorgegebenen maximalen Bremsschlupf reduzierte Umfangsgeschwindigkeit des Antriebsrads und r der dynamische Reifenhalbmesser (Reifenradius) des jeweiligen Antriebsrads ist.

Bei einer aktuellen Fahrgeschwindigkeit von 25 m/s ergibt sich für einen maximal zulässigen Bremsschlupf von 15 % im vorliegenden Beispiel eine Geschwindigkeit vₘᵢₙ = 21,25 m/s (Meter pro Sekunde). Der auf diese Weise ermittelte Wert für die Mindest-Bremsdrehzahl nₘᵢₙ wird anhand der aktuellen Fahrsituation für jedes der Antriebsräder AR1 bis AR4 individuell ermittelt und vom ABS-Steuergerät ABS an die jeweils zugehörigen Umrichter U1 bis U4 übermittelt. Auf diese Weise erfolgt eine direkte Steuerung der Umrichter U1 bis U4 zur Steuerung der Raddrehzahlen der Antriebsräder AR1 bis AR4 in der Weise, dass die jeweils vorgegebene Mindest-Bremsdrehzahl nₘᵢₙ nicht unterschritten wird. Während des Bremsvorganges wird diese Mindest-Bremsdrehzahl vom ABS-Steuergerät ständig aktualisiert und den Umrichtern U1 bis U4 mitgeteilt.

Den Umrichtern U1 bis U4 kann außer der Mindest-Bremsdrehzahl auch der aktuelle Istwert der Raddrehzahl des zugehörigen Antriebsrads AR1 bis AR4 über die Steuereingänge S1 bis S4 übermittelt werden, so dass im Umrichter U1 bis U4 ein ständiger Istwert-Sollwert-Vergleich zu Regelzwecken durchgeführt werden kann. Die Umrichter U1 bis U4 können somit auch allgemein als elektrische Motorsteuereinrichtungen bezeichnet werden.

## Patentansprüche

1. Fahrzeug mit elektromotorischem Fahrzeugantrieb, der Antriebsmotoren (M1 bis M4) umfasst, mit einem Steuergerät (SG), das während eines Bremsvorgangs den jeweiligen Antriebsmotor (M1 bis M4) als Generator betreibt, das heißt den Umrichter (U1 bis U4) des jeweiligen Antriebsmotors (M1 bis M4) mit einem Bremsmoment ansteuert, und einem ABS-Steuergerät (ABS), bei dem während des Bremsvorganges die Bremswirkung der als Generator betriebenen Antriebsmotoren (M1 bis M4) so begrenzt wird, dass der Bremsschlupf an mindestens einem Antriebsrad (AR1 bis AR4) auf einen vorgegebenen Schwellwert begrenzt wird, wobei die Drehzahl jedes Antriebsmotors (M1 bis M4) von dem ihm zugeordneten steuerbaren Umrichter (U1 bis U4) geregelt wird, **dadurch gekennzeichnet, dass** zur Begrenzung des Bremsschlupfes das ABS-Steuergerät (ABS) in direkter Steuerung jedem Umrichter (U1 bis U4) eine nicht zu unterschreitende Mindest-Bremsdrehzahl (nₘᵢₙ) für den ihm zugeordneten Antriebsmotor (M1 bis M4) ständig übermittelt, dass im ABS-Steuergerät (ABS) für jedes Antriebsrad (AR1 bis AR4) in Abhängigkeit von der aktuellen Fahrgeschwindigkeit sowie weiterer Parameter die individuelle Mindest-Drehzahl (nₘᵢₙ) vorgegeben wird, und dass die Umrichter (U1 bis U4), aufgrund der ständigen, das heißt auch während des normalen Fahrbetriebs erfolgenden Übermittlung der Mindest-Bremsdrehzahl (nₘᵢₙ) in der Bremssituation durch eine Drehzahl-Grenzwertüberwachung eine entsprechende Einhaltung der Mindest-Bremsdrehzahl (nₘᵢₙ) vornehmen können, bei der während des Bremsvorgangs alle oberhalb der Mindest-Bremsdrehzahl (nₘᵢₙ) liegenden Bremsdrehzahlen zulässig sind, da damit sichergestellt ist, dass der Bremsschlupf an den Antriebsrädern (AR1 bis AR4) nicht unzulässig groß ist, so dass die Drehzahl des vom Umrichter (U1 bis U4) in dem ihm zugeordneten Antriebsmotor (M1 bis M4) erzeugten Drehfelds so geregelt wird, dass die vorgegebene Mindest-Bremsdrehzahl (nₘᵢₙ) nicht unterschritten wird.

2. Fahrzeug nach Anspruch 1, **dadurch gekennzeichnet, dass** bei Verwendung von Synchronmaschinen als Antriebsmotoren (M1 bis M4) die Drehzahl des vom Umrichter (U1 bis U4) erzeugten Drehfelds die Mindest-Bremsdrehzahl (nₘᵢₙ) des zugehörigen Antriebsrads (AR1 bis AR4) nicht unterschreitet.

3. Fahrzeug nach einem der Ansprüche 1 oder 2, **dadurch gekennzeichnet, dass** für eine maximale Bremswirkung der maximale Bremsschlupf für jedes Antriebsrad auf einen Wert zwischen 10 % bis 20 % der Fahrgeschwindigkeit des Fahrzeugs begrenzt ist.

4. Fahrzeug nach einem der vorhergehenden Ansprüche, **dadurch gekennzeichnet, dass** beim Bremsvorgang die von den im Generatorbetrieb betriebenen Antriebsmotoren (M1 bis M4) ausgehende Bremswirkung durch Reibungsbremsen (RB1 bis RB4) unterstützt wird.

5. Fahrzeug nach Anspruch 4, **dadurch gekennzeichnet, dass** ein Fahrdynamikregler oder ein sonstiges Steuergerät (SG) ein von den Reibungsbremsen (RB1 bis RB4) zu erzeugendes Grund-Bremsmoment an das ABS-Steuergerät (ABS) übermittelt, und dass das ABS-Steuergerät (ABS) die Reibungsbremsen (RB1 bis RB4) entsprechend betätigt und das für eine optimale Bremswirkung erforderliche Rest-Bremsmoment über die Drehzahlregelung der im Generatorbetrieb arbeitenden Antriebsmotoren (M1 bis M4) einstellt.

## Claims

1. Vehicle with an electric motor vehicle drive which comprises drive motors (M1 to M4) with a control device (SG), which during a braking process operates the respective drive motor (M1 to M4) as a generator, i.e. controls the inverter (U1 to U4) of the respective drive motor (M1 to M4) with a braking torque, and an ABS control device (ABS), in which during the braking process the braking effect of the drive motors (M1 to M4) operated as generators is limited so that the brake slip is limited on at least one drive wheel (AR1 to AR4) to a predefined threshold, wherein the speed of each drive motor (M1 to M4) is controlled by the controllable inverter (U1 to U4) assigned thereto, **characterised in that** to limit the brake slip the ABS control device (ABS) in direct control transmits continuously to each inverter (U1 to U4) a minimum braking speed (nₘᵢₙ) which should not be fallen below for the drive motor (M1 to M4) assigned thereto, **in that** in the ABS control device (ABS) the individual minimum speed (nₘᵢₙ) is defined for each drive wheel (AR1 to AR4) as a function of the current driving speed and additional parameters, and **in that** the inverters (U1 to U4), on the basis of the continuous transmission of the minimum braking speed (nₘᵢₙ), also performed during normal driving operation, can maintain in the braking situation by means of speed threshold monitoring a corresponding adherence to the minimum braking speed (nₘᵢₙ), in which during the braking process all braking speeds above the minimum braking speed (nₘᵢₙ) are permissible, as it is ensured in this way that the brake slip at the drive wheels (AR1 to AR4) is not impermissibly high, such that the speed of the rotary field produced by the inverter (U1 to U4) in the drive motor (M1 to M4) assigned thereto is controlled so that the specified minimum braking speed (nₘᵢₙ) is not fallen below.

2. Vehicle according to claim 1, **characterised in that** when using synchronous machines as drive motors (M1 to M4) the speed of the rotary field produced by the inverter (U1 to U4) does not fall below the minimum braking speed (nₘᵢₙ) of the associated drive wheel (AR1 to AR4).

3. Vehicle according to any of claims 1 or 2, **characterised in that** for a maximum braking effect the maximum brake slip for each drive wheel is limited to a value between 10% to 20% of the driving speed of the vehicle.

4. Vehicle according to any of the preceding claims, **characterised in that** during the braking process the braking effect coming from the drive motors (M1 to M4) operated in generator mode is supported by friction brakes (RB1 to RB4).

5. Vehicle according to claim 4, **characterised in that** a vehicle dynamic controller or other control device (SG) transmits a basic braking torque to be produced by the friction brakes (RB1 to RB4) to the ABS control device (ABS), and **in that** the ABS control device (ABS) activates the friction brakes (RB1 to RB4) accordingly and adjusts the remaining braking torque required for an optimum braking action by means of the speed control of the drive motors (M1 to M4) operating in generator mode.

## Revendications

1. Véhicule à entraînement électromoteur, qui comprend des moteurs d'entraînement (M1 à M4), avec un appareil de commande (SG), qui fait fonctionner le moteur d'entraînement (M1 à M4) respectif en tant que générateur pendant une opération de freinage, autrement dit commande le convertisseur (U1 à U4) du moteur d'entraînement (M1 à M4) respectif avec un couple de freinage, et un appareil de commande d'ABS (ABS), dans lequel l'effet de freinage des moteurs d'entraînement (M1 à M4) fonctionnant en tant que générateur est limité pendant l'opération de freinage de sorte que le glissement au freinage est limité au niveau d'au moins une roue d'entraînement (AR1 à AR4) à une valeur seuil prédéfinie, dans lequel la vitesse de rotation de chaque moteur d'entraînement (M1 à M4) est régulée par le convertisseur (U1 à U4) pouvant être commandé qui lui est associé, **caractérisé en ce que** pour la limitation du glissement au freinage, l'appareil de commande d'ABS (ABS) transmet en permanence en commande directe à chaque convertisseur (U1 à U4) une vitesse de rotation de freinage minimum (nₘᵢₙ) à ne pas sous-passer pour le moteur d'entraînement (M1 à M4) qui lui est associé, que la vitesse de rotation minimum (nₘᵢₙ) individuelle est prédéfinie dans l'appareil de commande d'ABS (ABS) pour chaque roue d'entraînement (AR1 à AR4) en fonction de la vitesse de conduite actuelle ainsi que d'autres paramètres, et que les convertisseurs (U1 à U4), en raison de la transmission permanente, autrement dit ayant également lieu pendant le mode de conduite normal, de la vitesse de rotation de freinage minimum (nₘᵢₙ) peuvent procéder dans la situation de freinage par une surveillance de la valeur limite de la vitesse de rotation à un respect correspondant de la vitesse de rotation de freinage minimum (nₘᵢₙ), lors duquel pendant l'opération de freinage, toutes les vitesses de rotation de freinage supérieures à la vitesse de rotation de freinage minimum (nₘᵢₙ) sont admissibles, étant donné qu'il est ainsi garanti que le glissement au freinage n'est pas inadmissiblement grand au niveau des roues d'entraînement (AR1 à AR4), de sorte que la vitesse de rotation du champ tournant généré par le convertisseur (U1 à U4) dans le moteur d'entraînement (M1 à M4) qui lui est associé est régulé de sorte que la vitesse de rotation de freinage minimum (nₘᵢₙ) prédéfinie n'est pas sous-passée.

2. Véhicule selon la revendication 1, **caractérisé en ce que** lors de l'utilisation de machines synchrones en tant que moteurs d'entraînement (M1 à M4), la vitesse de rotation du champ tournant généré par le convertisseur (U1 à U4) ne passe pas sous la vitesse de rotation de freinage minimum (nₘᵢₙ) de la roue d'entraînement (AR1 à AR4) correspondante.

3. Véhicule selon l'une quelconque des revendications 1 ou 2, **caractérisé en ce que** le glissement au freinage maximum est limité pour chaque roue d'entraînement pour un effet de freinage maximum à une valeur entre 10 % à 20 % de la vitesse de conduite du véhicule.

4. Véhicule selon l'une quelconque des revendications précédentes, **caractérisé en ce que** lors de l'opération de freinage, l'effet de freinage partant des moteurs d'entraînement (M1 à M4) fonctionnant dans le mode générateur est soutenu par des freins à friction (RB1 à RB4).

5. Véhicule selon la revendication 4, **caractérisé en ce qu'**un régulateur de dynamique de conduite ou un autre appareil de commande (SG) transmet un couple de freinage de base à générer par les freins à friction (RB1 à RB4) à l'appareil de commande d'ABS (ABS), et que l'appareil de commande d'ABS (ABS) actionne en conséquence les freins à friction (RB1 à RB4) et règle le couple de freinage résiduel nécessaire à un effet de freinage optimal par le biais de la régulation de la vitesse de rotation des moteurs d'entraînement (M1 à M4) fonctionnant dans le mode générateur.
